**Europäisches Patentamt**

(19) **European Patent Office**

**Office européen des brevets**

(11) Numéro de publication: **0 158 105**
**B1**

(12) # FASCICULE DE BREVET EUROPÉEN

(45) Date de publication du fascicule du brevet:
**10.06.87**

(51) Int. Cl.⁴: **B 29 C 49/42**, B 29 C 49/64

(21) Numéro de dépôt: **85102391.1**

(22) Date de dépôt: **04.03.85**

(54) **Procédé de fabrication de bouteilles en matière plastique à partir d'ébauches creuses obtenues par moulage et dispositifs pour la mise en oeuvre de ce procédé.**

(30) Priorité: **16.03.84 FR 8404248**

(43) Date de publication de la demande:
**16.10.85 Bulletin 85/42**

(45) Mention de la délivrance du brevet:
**10.06.87 Bulletin 87/24**

(84) Etats contractants désignés:
**AT DE GB IT NL**

(56) Documents cité:
**US-A-3 770 860**
**US-A-3 994 655**
**US-A-4 005 245**
**US-A-4 087 227**
**US-A-4 122 138**
**US-A-4 201 535**
**US-A-4 313 905**

(73) Titulaire: **SIDEL, 55, rue du Pont VI, F- 76053 Le Havre Cedex (FR)**

(72) Inventeur: **Bellehache, Pierre, 3 Impasse des Phares, F-76310 Sainte Adresse (FR)**
Inventeur: **La Barre, Paul, 21 Rue Joseph Cambon, F-76310 Sainte Adresse (FR)**

(74) Mandataire: **Puit, Thierry, c/o Centre de Recherches de Pont- à- Mousson B.P. 28, F-54703 Pont- à- Mousson Cedex (FR)**

LIBER, STOCKHOLM 1987

## Description

La présente invention a trait à un procédé de fabrication de bouteilles en matière plastique à partir d'ébauches creuses obtenues par moulage et à des dispositifs pour la mise en oeuvre de ce procédé.

Elle trouve notamment son application dans des installations connues où l'on fabrique des bouteilles en matière plastique par étirage biaxial de la matière, à partir d'ébauches ayant la forme d'un manchon cylindrique creux fermé à une de ses extrémités.

Ces ébauches sont obtenues par exemple dans des moules à multiples empreintes à l'intérieur desquelles on injecte, autour d'un noyau central, de la matière plastique.

Chaque moule à empreintes multiples est composé de deux demi-moules que l'on sépare en fin d'injection pour en extraire les ébauches dont la forme rappelle celle d'une éprouvette d'expérience.

Après extraction du moule, les ébauches sont aussitôt transférées vers une plate-forme de refroidissement dépendant de la machine à laquelle appartient le moule, et assurant d'une façon statique, le refroidissement interne et externe des ébauches par une ventilation libre, cette opération étant rendue indispensable pour que les ébauches ne se déforment pas lors de leur manipulation ultérieure.

Cette façon courante de refroidir les ébauches ralentit considérablement les cadences de production du moule dans lesquelles elles sont élaborées, en raison du temps d'occupation relativement long de la plate-forme statique de refroidissement des ébauches située en aval du moule et par laquelle toute ébauche sortant du moule doit obligatoirement transiter pour être refroidie avant d'être évacuée vers sa destination finale, cette méthode de refroidissement créant en quelque sorte un goulet d'étranglement en aval des moules d'injection.

L'opération précédente terminée, des préhenseurs connus, du type à ventouse pneumatique par exemple, libèrent la plate-forme de refroidissement de ses ébauches puis évacuent ces dernières vers leur point de destination finale tandis qu'une nouvelle série d'ébauches est injectée dans un moule à empreintes multiples. Au cours de cette dernière phase, on fait par exemple appel à deux types de préhenseurs pneumatiques, l'un assurant une préhension externe de l'ébauche, l'autre reprenant ensuite celle-ci par l'intérieur pour la retourner et la mettre en place d'une façon verticale ordonnée sur un convoyeur.

Afin d'éviter les temps improductifs de refroidissement, l'invention prévoit de refroidir les ébauches directement sur les préhenseurs pneumatiques, depuis la préhension directe des ébauches dans le moule jusqu'au point de destination finale où elles peuvent par exemple être abandonnées sur un convoyeur d'évacuation. Pour parvenir à ce résultat, l'invention a pour objet un procédé de fabrication de bouteilles en matière plastique à partir d'ébauches creuses obtenues par moulage, fermées à une extrémité, dans lequel des préhenseurs internes et externes du type à ventouse pneumatique sont utilisés pour assurer l'extraction des ébauches formées sur le noyau des moules et simultanément le transfert de celles-ci à la sortie du moule, caractérisé en ce que l'on met en circulation l'air de maintien des ébauches par les préhenseurs contre les parois des ébauches, de façon à assurer le refroidissement des ébauches pendant leur transfert sur les préhenseurs.

La mise en oeuvre de ce procédé est assurée par un dispositif comportant des préhenseurs externes et internes, du type à ventouse pneumatique, assurant l'extraction des ébauches de leurs noyaux de moulage et simultanément le transfert de celles-ci à la sortie du moule, caractérisé en ce que les ébauches délimitent avec leurs préhenseurs des chambres annulaires dans lesquelles est mis en circulation de l'air de refroidissement des parois des ébauches.

D'autres caractéristiques et avantages apparaîtront lors de la description faite en référence aux dessins annexés donnés à titre d'exemple et dans lesquels:

- la figure 1 est une vue schématique en coupe d'une partie d'un moule dans lequel on fabrique des ébauches en matière plastique.

- la figure 2 est une vue schématique et en coupe d'un préhenseur externe doté d'un circuit de refroidissement externe d'une ébauche selon l'invention.

- la figure 3 est une vue analogue à la figure 2 d'un préhenseur interne doté d'un circuit de refroidissement interne d'une ébauche selon l'invention.

- la figure 4 est une vue partielle en perspective, à plus grande échelle que la figure 3, d'une extrémité d'un préhenseur interne portant une ébauche.

- la figure 5 est une vue partielle en perspective et à même échelle que la figure 4 de l'autre extrémité d'un préhenseur interne.

- la figure 6 est une vue analogue aux figures 2 et 3 montrant une ébauche portée à la fois par un préhenseur externe et interne.

- la figure 7 est une vue schématique en perspective d'un préhenseur interne déposant une ébauche refroidie sur un convoyeur.

- la figure 8 est une vue schématique d'ensemble montrant le fonctionnement des préhenseurs externes et internes selon l'invention.

La présente invention trouve généralement son application dans les installations où l'on élabore, par injection ou extrusion-soufflage dans des moules, des ébauches en matière plastique destinées à la fabrication de bouteilles selon les procédés connus de la biorientation par exemple. Avant d'être stockées ou dirigées vers les lieux où l'on fabrique les bouteilles, les ébauches ainsi obtenues doivent être refroidies dès leur sortie des moules afin qu'elles ne se déforment pas et ne soient plus dans des conditions de thermoélasticité.

La présente invention prévoit de refroidir les ébauches dés leur extraction des moules, sur des préhenseurs pneumatiques chargés de leur extraction et de leur manutention, l'originalité de cette invention étant de mettre à profit les circuits pneumatiques de ces préhenseurs pour assurer le refroidissement des ébauches au cours de leur transport.

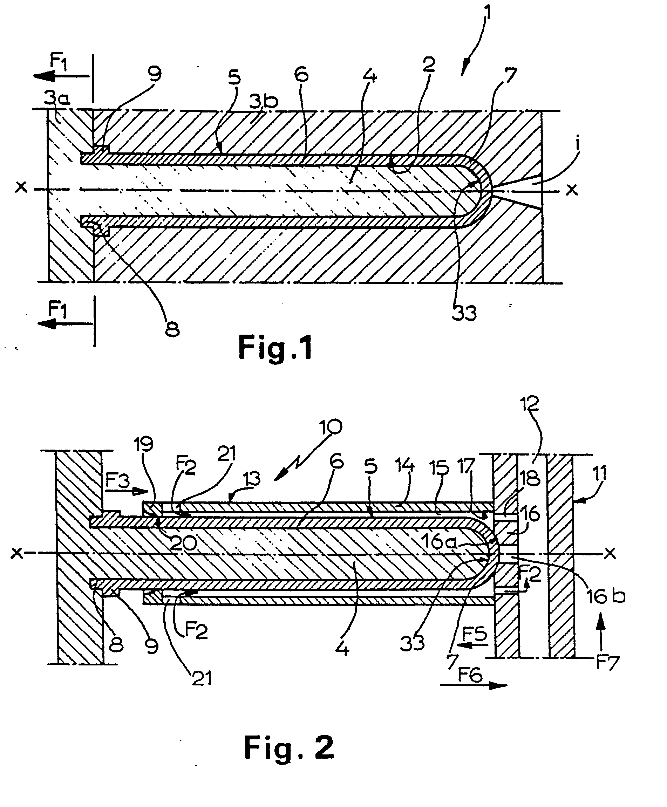

Les ébauches sont généralement élaborées dans des moules à multiples empreintes. La figure 1 est une vue partielle d'un moule 1 à multiples empreintes 2 (une seule empreinte visible dans cette figure), fractionnable en deux parties ou demi-moules 3a et 3b, par un plan perpendiculaire à l'axe x-x d'un noyau cylindrique 4 solidaire du demi-moule 3a, ce demi-moule 3a pouvant être séparé du demi-moule 3b par déplacement selon l'axe x-x dans le sens indiqué par les flèches F1 par exemple.

Lorsqu'on injecte de la matière plastique par un orifice d'injection i d'une empreinte 2 d'un moule 1 fermé, autour d'un noyau cylindrique 4, on obtient une ébauche 5 composée d'un corps cylindrique 6 creux fermé à une extrémité par une calotte sphérique 7, l'autre extrémité ou col 8, étant ouvert, est doté à l'extérieur d'au moins une collerette 9 coaxiale à l'axe x-x du noyau cylindrique 4.

Quand l'injection de l'ébauche 1 est terminée, on sépare selon le sens des flèches F1, le demi-moule 3a du demi-moule 3b jusqu'à ce que la calotte sphérique 7 de l'ébauche, portée par le noyau 4, sorte du demi-moule 3b.

- La figure 2 montre un dispositif de préhension externe 10 d'ébauches 5 dont la mission est d'assurer l'extraction des ébauches disponibles sur le noyau 4 du moule 1 et, simultanément, le ttransfert et le refroidissement de celles-ci à la sortie du moule.

Le dispositif de préhension externe 10 est composé d'un bâti mobile 11 doté à l'intérieur d'un collecteur de succion 12 et à l'extérieur d'un nombre de préhenseurs externes 13 au moins égal à celui des empreintes 2 du moule 1.

Chaque préhenseur externe 13 est composé d'un corps tubulaire 14 coaxial à l'axe x-x d'une ébauche 5 introduite dans le préhenseur, le corps tubulaire 14 étant perpendiculaire au bâti mobile 11 qui le supporte.

Selon l'invention, le corps tubulaire 14 a un diamètre intérieur légèrement plus grand que le diamètre extérieur du corps cylindrique de l'ébauche pour former autour de cette dernière une chambre annulaire 15 de refroidissement, coaxiale à l'axe x-x. L'extrémité du corps tubulaire 14 est fermée par un fond 16, à empreinte sphérique centrale 16a percée d'un trou central 16b, servant d'appui et de centrage à l'ébauche 5. Le fond 16 est percé, au voisinage de la paroi interne 17 du corps tubulaire, de trous de succion 18 répartis circonférentiellement et mettant en communication la chambre annulaire 15 de refroidissement avec le collecteur de succion 12. L'extrémité du corps tubulaire 14 opposée au fond 16 possède un emboîtement tronconique 19 coaxial à l'axe x-x du préhenseur et convergeant ver l'intérieur pour faciliter l'engagement de l'ébauche 5 dans le corps tubulaire 14, le plus petit diamètre 20 de l'emboîtement 19 étant légèrement supérieur à celui de l'extérieur de l'ébauche 5 afin d'offrir à un guidage cette dernière, un guidage et une fermeture non hermétique à la chambre annulaire 15. Près de l'emboîtement tronconique 19, du côté du plus petit diamètre 20 de l'emboîtement, le corps tubulaire 14 est pourvu d'orifices d'aspiration 21 répartis circonférentiellement et mettant en communication, l'extérieur du préhenseur externe 13 avec la chambre annulaire 15.

Selon l'invention, les orifices d'aspiration 21, la chambre annulaire 15 et les trous de succion 16 sont dimensionnés pour obtenir, en combinaison avec la puissance d'une pompe à vide, par exemple, (non représentée sur les figures) raccordée au collecteur de succion 12, un écoulement intensif (selon le sens des flèches F2) de l'air aspiré par les orifices d'aspiration 21, sur les parois extérieures de l'ébauche; le régime d'écoulement de l'air aspiré étant du type transitoire ou de préférence turbulent, afin de favoriser un meilleur échange thermique entre les parois externes de l'ébauche à refroidir et l'air aspiré et d'obtenir, par voie de conséquence, un refroidissement rapide de l'ébauche.

Le type et le sens de circulation de l'air, ainsi obtenu, a également pour effet de créer un courant de succion favorisant l'aspiration de l'ébauche vers le fond 16 du corps tubulaire 14, selon le sens de la flèche F3, et son maintien en appui contre l'empreinte sphérique 16a de ce dernier pendant son refroidissement et son transport.

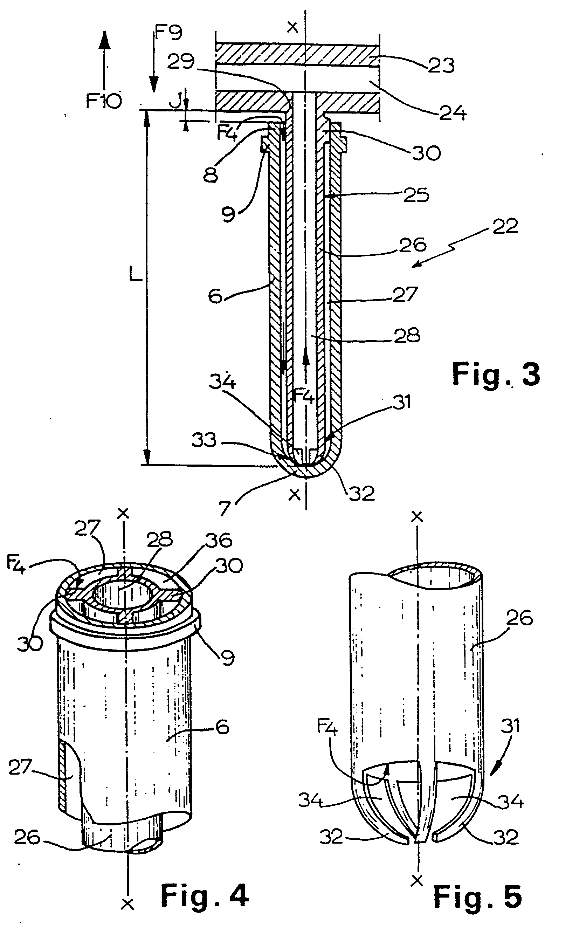

Selon l'exemple de réalisation représenté aux figures 3 à 7 un dispositif de préhension interne 22 est composé d'un bâti mobile 23 pourvu d'un collecteur de succion 24 central sur lequel sont rendus solidaires des préhenseurs internes 25 (un seul préhenseur interne représenté aux figures 3 à 7).

Selon l'invention, chaque préhenseur interne 25 possède un corps cylindrique 26 de diamètre extérieure, inférieur au diamètre intérieur de l'ébauche, créant ainsi une chambre annulaire 27 coaxiale à l'axe x-x.

Le corps 26 est percé sur toute sa longueur, d'un canal 28 intérieur débouchant dans le collecteur central de succion. La longueur L, hors tout, du corps 26 est légèrement supérieure à la profondeur de l'ébauche afin de créer un jeu J évitant que le col 8 de l'ébauche emboîtée sur le préhenseur ne vienne prendre appui contre le bâti mobile 23. Le corps cylindrique 26 du préhenseur interne 25 est perpendiculairement solidaire du bâti mobile 23, par une de ses extrémités 29. Cette dernière extrémité est dotée, à l'extérieur, de nervures de guidage 30, parallèles à l'axe x-x, régulièrement réparties sur sa cirfonférence et délimitant entre-elles des orifices d'aspiration 36. L'extrémité 31 du corps cylindrique 26, opposée au bâti mobile 23, est prolongée par des doigts arqués 32 en direction de l'axe x-x et équirépartis autour de ce dernier, leur surface extérieure épousant le profil d'appui interne concave 33 de la calotte sphérique 7 de l'ébauche à emboiter. Entre chaque doigt arqué 32, on obtient ainsi des orifices de passage 34 d'air mettant en communication la chambre annulaire 27 avec le canal central 28.

L'extrémité 31 comportant les doigts arqués 32 peut être du type rapportable sur le corps cylindrique 26; elle peut aussi se présenter sous d'autres formes pour s'adapter à des fonds d'ébauches diverses, l'essentiel étant d'offrir une surface d'appui compatible avec le profil d'appui interne concave 33 de l'ébauche, en même temps que de permettre une libre circulation, autour de l'ébauche et selon le sens de la flèche F4, de l'air aspiré par le collecteur de succion 24, et par, successivement, les jeux J, les orifices d'aspiration 36, la chambre annulaire 27, les orifices de passage 34 et le canal central 28.

Les jeux J, les orifices d'aspiration 36, la chambre annulaire 27, les orifices de passage 34, le canal central 28 sont dimensionnés pour obtenir autour de l'ébauche, en combinaison avec la puissance d'un dispositif de succion (pompe à vide, par exemple, non représentée sur les figures) raccordé au collecteur de succion 24, un écoulement du type transitoire ou de préférence turbulent, de l'air atmosphérique aspiré par le jeu J à travers les orifices d'aspiration 36 et de passage 34, ce type d'écoulement favorisant l'échange thermique entre l'air aspiré et l'ébauche et permettant ainsi un refroidissement intensif et rapide de cette dernière. L'ébauche bénéficie simultanément de ce type d'écoulement et de son sens F4 pour son maintien par succion sur le préhenseur mâle 25.

Le nombre de préhenseurs internes 25 sur le bâti mobile 23, est égal au nombre de préhenseurs femelles 13 sur le bâti mobile 11 et leur disposition axiale à distance régulière sur un même plan par rapport au bâti mobile 23 est identique à celle des préhenseurs externes 13 sur le bâti mobile 11.

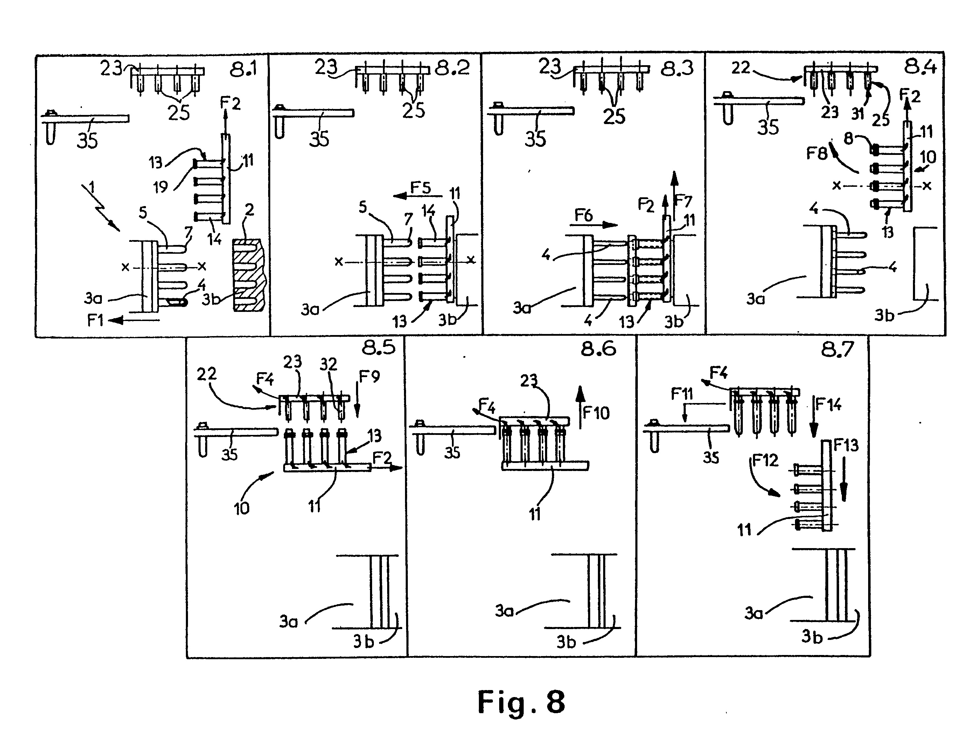

Fonctionnement général: Selon la figure 8, pour permettre la préhension des ébauches 5 sur les noyaux 4, après avoir ouvert le moule 1 à multiples empreintes 2, jusqu'à effacement total de la demi-coquille 3a, selon les flèches F1 (figure 8-1), on amène au moyen d'un dispositif connu, le bâti mobile 11 au droit du moule 1 (fig. 8-2) et on présente les emboitements 19 de chaque préhenseur externe 13, face aux calottes sphériques 7 des ébauches 5 maintenues sur leurs noyaux respectifs 4; lorsque les préhenseurs externes 13 sont en coïncidence axiale avec les axes x-x de leurs ébauches respectives, on fait avancer le bâti mobile 11 selon le sens indiqué par la flèche F5 vers le demi-moule 3a, jusqu'à ce que les ébauches pénétrant coaxialement à l'intérieur de ces corps cylindriques 14 respectifs aient atteint et pris appui par leur calotte sphérique 7 sur l'empreinte sphérique 16a des fonds 16 (figure 2). On met ensuite en service le circuit de succion décrit plus haut, puis on recule le bâti mobile 11 selon la flèche F6 (Fig. 8-3) pour extraire les ébauches 5 de leur noyau 4 et procéder à leur évacuation, selon la flèche F6, et à leur refroidissement simultanés.

On referme le moule en réunissant les demi-moules 3a et 3b, puis on procède à une nouvelle élaboration d'ébauches dans le moule refermé, tandis que le dispositif de préhension externe poursuit son mouvement de transfert (selon le sens d'une flèche F7) et le refroidissement des ébauches simultanément à leur transfert.

Au cours de leur trajet, alors que les parois extérieures des ébauches ne sont pas encore totalement refroidies, ces dernières sont reprises par l'intérieur grâce au dispositif de préhension interne 23 mobile dont la mission est de procéder simultanément à la poursuite du transfert des ébauches vers leur point de destination final et au refroidissement de leurs parois internes.

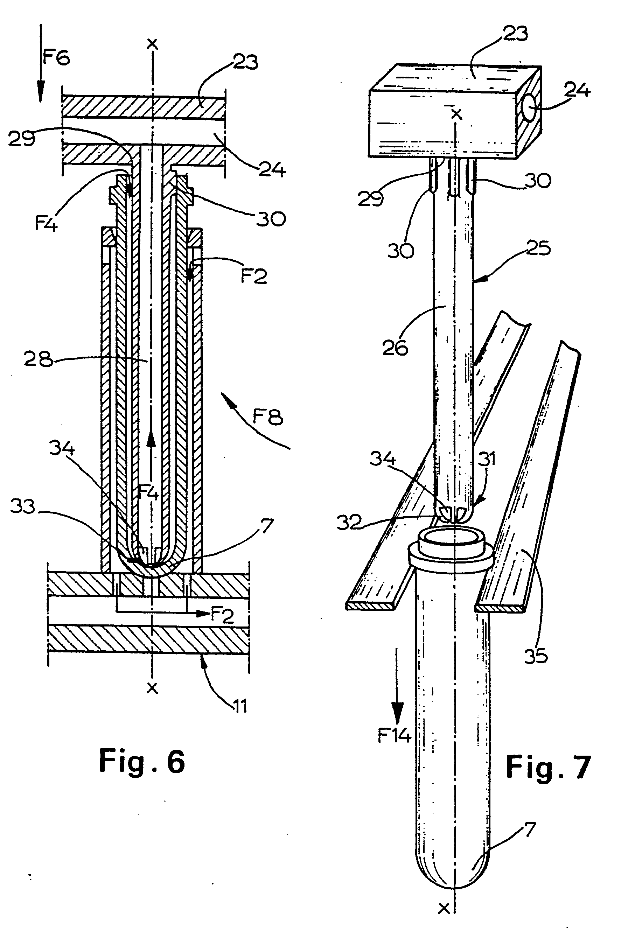

Selon la figure 8-4, pour effectuer le transfert des ébauches refroidies par les préhenseurs externes 13 vers les préhenseurs internes 25, on fait basculer le bâti mobile 11 du dispositif de préhension externe 10 selon un plan vertical et le sens indiqué par la flèche F8, on amène ensuite les cols 8 des ébauches supportées par les préhenseurs externes 13, en coïncidence axiale avec les extrémités 31 des préhenseurs internes, puis on engage axialement ces derniers selon le sens des flèches F9 (Fig. 8-5) jusqu'à ce que leurs doigts arqués 32 viennent buter sur les fonds concaves 33 des calottes sphériques 7 des ébauches, comme montré aux figures 3, 6 et 8-6. Selon cette configuration dans laquelle les préhenseurs externes 13 et les préhenseurs internes 25 sont positionnés respectivement à l'extérieur et à l'intérieur des ébauches 5, le refroidissement interne de ces derniers est mis en service, tandis que le refroidissement externe de ces derniers se poursuit. L'opération de refroidissement extérieur des ébauches 5 terminée, on suspend la succion et le refroidissement externe des ébauches 5, puis on redéplace le bâti 23 supportant les ébauches dans le sens inverse indiqué par la flèche F 10, jusqu'à ce que les ébauches maintenues par les préhenseurs internes soient totalement dégagées des préhenseurs externes; les ébauches ainsi maintenues et refroidies sur leurs préhenseurs internes comme montré à la figure 8-7, peuvent être dirigées vers leur destination finale selon le sens d'une flèche F11, tandis que le dispositif de préhension externe 13 retourne vers le moule 1, selon le sens des flèches F12 puis F13, pour l'extraction des nouvelles ébauches produites dans ce moule lors des opérations de refroidissement et de transfert des ébauches précédentes; un nouveau cycle recommence tandis que le dispositif de préhension interne poursuit son refroidissement intérieur des ébauches, produites précédenment, avant de les abandonner par gravité, col en haut, sur un convoyeur 35, comme indiqué selon le sens d'une flèche F14 (figures 7).

Grâce au procédé que nous venons de décrire, il est possible d'obtenir une cadence de production de plus de 20 % supérieure à celle obtenue par les procédés connus, non seulement en raison du refroidissement intensif des ébauches lié aux conditions particulières d'écoulement du fluide de refroidissenent autour des ébauches que créent les dispositifs mettant en oeuvre ce procédé, mais aussi en raison de l'opération de refroidissement qui s'effectue directement sur les préhenseurs de manutention sans ralentir les cadences de production des moules produisant les ébauches.

A titre indicatif, le refroidissement des ébauches 5 par ventilation libre sur des plate-formes de refroidissement du type connu est obtenu par échange thermique avec une circulation d'air du type laminaire (nombre de Reynolds inférieur ou égal à 2 000) tandis qu'avec le procédé et le dispositif selon l'invention, le régime de l'air de refroidissement mis en circulation autour ou à l'intérieur des ébauches est du type transitoire, voisin du régime turbulent (nombre de Reynolds supérieur à 8 000) ce qui permet d'obtenir des échanges thermiques accélérés conduisant à des temps de refroidissement réduits de plus de 20 %.

Un autre avantage du procédé consistant à refroidir les ébauches 5 directement sur les préhenseurs est de supprimer la plate-forme de refroidissement nécessaire dans les installations de type connu où toute nouvelle injection d'ébauches 5 dans les moules 1 doit attendre que les ébauches précédemment injectées aient quitté cette plate-forme de refroidissement. Selon le procédé de l'invention, la production des ébauches 5 est quasi ininterrompue.

Il est évident que le procédé et les dispositifs décrits précédemment pourraient s'étendre à des procédés autres que ceux mettant en oeuvre des matières plastiques, de même que la configuration des dispositifs pourrait être différente de ceux décrits, afin de s'adapter à d'autres profils d'ébauches ou autres produits, tant sur le plan géométrique que dimensionnel.

Bien que dans l'exemple décrit ci-dessus, le procédé et le dispositif de refroidissement des ébauches, lors de la manutention, soit appliqué à des ébauches obtenues par injection, ce procédé et ce dispositif sont également applicables aux ébauches à une extrémité fermée, obtenues par extrusion et soufflage.

## Revendications

1.- Procédé de fabrication de bouteilles en matière plastique à partir d'ébauches creuses (5) obtenues par moulage, fermées à une extrémité, dans lequel des préhenseurs internes et externes (13-25) du type à ventouse pneumatique sont utilisés pour assurer l'extraction des ébauches formées sur le noyau des moules et simultanément le transfert de celles-ci à la sortie du moule, caractérisé en ce que l'on met en circulation l'air de maintien des ébauches (5) par les préhenseurs contre les parois des ébauches, de façon à assurer le refroidissement des ébauches pendant leur transport sur les préhenseurs.

2.- Dispositif pour la mise en oeuvre du procédé selon la revendication 1 comportant des préhenseurs externes et internes (13-25), du type à ventouse pneumatique, assurant l'extraction des ébauches (5) de leurs noyaux de moulage et simultanément le transfert de celles-ci à la sortie du moule caractérisé en ce que les ébauches (5) délimitent, avec leurs préhenseurs (13-25), des chambres annulaires (15-27) dans lesquelles est mis en circulation de l'air de refroidissement des parois des ébauches.

3.- Dispositif selon la revendication 2 caractérisé en ce que les chambres annulaires (15-27) sont reliées à un collecteur de succion (12-24) et en communication avec l'atmosphère par des orifices d'aspiration d'air (21-36).

4.- Dispositif selon l'une des revendications 2 et 3 caractérisé en ce que le diamètre intérieur du corps tubulaire (14) du préhenseur externe (13) est supérieur au diamètre extérieur du corps cylindrique (6) d'une ébauche (5) en formant la chambre annulaire (15) de refroidissement de la paroi extérieure de l'ébauche.

5.- Dispositif selon la revendication 4 caractérisé en ce que le collecteur de succion (12) est mis en communication avec la chambre annulaire (15) par des orifices de succion (18) du fond (16), répartis circonférentiellement et au voisinage de la paroi interne (17) du corps tubulaire (14) du préhenseur externe (13).

6.- Dispositif selon l'une des revendications 4 et 5 caractérisé en ce que les orifices d'aspiration d'air (21) du corps tubulaire (14) du préhenseur externe (13) sont répartis circonférentiellement autour du corps cylindrique (6) de l'ébauche (5), au voisinage d'un emboîtement tronconique (19) d'entrée de l'ébauche (5) dans le préhenseur externe (13).

7.- Dispositif selon l'une des revendications 2 et 3 caractérisé en ce que le diamètre extérieur du corps cylindrique (26) du préhenseur interne (25) est inférieur au diamètre intérieur de l'ébauche 5 en formant la chambre annulaire (27) de refroidissement de la paroi interne de l'ébauche.

8.- Dispositif selon la revendication 7 caractérisé en ce que le corps cylindrique (26) du préhenseur interne (25) a une longueur supérieure à la longueur totale de l'ébauche en ménageant un jeu (J) entre le bâti mobile (23) portant le préhenseur interne (25) et le bord du col (8) de l'ébauche (5).

9.- Dispositif selon l'une des revendications 7 et 8 caractérisé en ce que l'extrémité (31) du corps cylindrique (26) du préhenseur interne (25) comporte des doigts arqués (32) délimitant des orifices de passage d'air (34) et servant d'appui à la calotte sphérique (7) formant le fond de l'ébauche (5).

10.- Dispositif selon l'une quelconque des revendications 7 et 9 caractérisé en ce que les orifices d'aspiration d'air (36) sont délimités par des nervures de guidage (30) répartis circonférentiellement sur le corps cylindrique (26), au voisinage du bâti mobile (23).

11.- Dispositif selon l'une quelconque des revendications 1 à 10 caractérisé en ce que le régime de circulation de l'air de refroidissenent dans les préhenseurs externes (13) et internes (25) est du type transitoire ou turbulent.


**Patentansprüche**

1. Verfahren zum Herstellen von Kunststoffflaschen aus gegossenen hohlen Vorformlingen (5), die an einem Ende geschlossen sind, bei welchem innere und äußere Greifer (13 - 25) in Art von pneumatischen Saugeinrichtungen verwendet werden, um das Abziehen der auf dem Kern der Formen gebildeten Vorformlinge und gleichzeitig deren Transport zum Verlassen der Form sicherstellen, dadurch gekennzeichnet, daß die Luft zum Halten der Vorformlinge (5) durch die Greifer gegen die Wände der Vorformlinge umgewälzt wird, derart, daß die Abkühlung der Vorformlinge während ihres Transports auf den Greifern sichergestellt wird.

2. Vorrichtung zur Durchführung des Verfahrens nach Anspruch 1, mit äußeren und inneren Greifern (13 - 25) in Art einer pneumatischen Saugeinrichtung, welche das Abziehen der Vorformlinge (5) von ihren Formkernen und gleichzeitig die Überführung dieser am Austritt der Form sicherstellen, dadurch gekennzeichnet, daß die Vorformlinge (5) mit ihren Greifern (13 - 25) Ringkammern (15 - 27) begrenzen, in welchen die Kühlluft für die Wände der Vorformlinge (5) umgewälzt wird.

3. Vorrichtung nach Anspruch 2, dadurch gekennzeichnet, daß die Ringkammern (15, 27) mit einer Saugsammelleitung (12 - 24) und mit der Außenumgebung durch Luftansaugöffnungen (21 - 36) verbunden sind.

4. Vorrichtung nach Anspruch 2 und 3, dadurch gekennzeichnet, daß der Innendurchmesser des rohrförmigen Körpers (14) des äußeren Greifers (13) größer als der Außendurchmesser des zylindrischen Körpers (6) eines Vorformlings (5) ist, um die Ringkammer (15) zur Abkühlung der Außenwand des Vorformlings zu bilden.

5. Vorrichtung nach Anspruch 4, dadurch gekennzeichnet, daß die Saugsammelleitung (12) mit der Ringkammer (15) über Saugöffnungen (18) am Boden (16) in Verbindung steht, welche über den Umfang verteilt und nahe der Innenwand (17) des rohrförmigen Körpers (14) des äußeren Greifers (13) angeordnet sind.

6. Vorrichtung nach Anspruch 4 und 5, dadurch gekennzeichnet, daß die Luftansaugöffnungen (21) des rohrförmigen Körpers (14) des äußeren Greifers (13) um den zylindrischen Körper (6) des Vorformlings (5) in Umfangsrichtung verteilt und in der Nähe eines kegelstumpfförmigen Teils (19) am Einlaß des Vorformlings (5) im äußeren Greifer (13) angeordnet sind.

7. Vorrichtung nach Anspruch 2 und 3, dadurch gekennzeichnet, daß der Außendurchmesser des zylindrischen Körpers (26) des inneren Greifers (25) kleiner als der Innendurchmesser des Vorformlings (5) ist, um die Ringkammer (27) zur Abkühlung der Innenwand des Vorformlings zu bilden.

8. Vorrichtung nach Anspruch 7, dadurch gekennzeichnet, daß der zylindrische Körper (26) des inneren Greifers (25) eine größere Länge als die Gesamtlänge des Vorformlings besitzt, so daß ein Spiel (J) zwischen dem beweglichen Rahmen (23), der den inneren Greifer (25) trägt, und dem Rand des Halses (8) des Vorformlings (5) vorhanden ist.

9. Vorrichtung nach Anspruch 7 und 8, dadurch gekennzeichnet, daß das Ende (31) des zylindrischen Körpers (26) des inneren Greifers (25) bogenförmige Finger (32) aufweist, welche Luftdurchgangsöffnungen (34) begrenzen und eine Stütze für eine den Boden des Vorformlings (5) bildende Kugelkalotte (7) bilden.

10. Vorrichtung nach einem der Ansprüche 7 und 9, dadurch gekennzeichnet, daß die Luftansaugöffnungen (36) durch Führungsrippen (30) begrenzt sind, welche über dem Umfang auf dem Zylinderkörper (26) benachbart des beweglichen Rahmens (23) verteilt angeordnet sind.

11. Vorrichtung nach einem der Ansprüche 1 bis 10, dadurch gekennzeichnet, daß die Kühlluftumwälzung in den äußeren (13) und inneren (25) Greifern transitorisch oder turbulent ist.


**Claims**

1. Method for the production of bottles from plastics material from hollow blanks (5) obtained by moulding and which are closed at one end, in which internal and external gripping means (13-25) of the type comprising a pneumatic suction arrangement are used to ensure the extraction of the blanks formed on the core of the moulds and simultaneously the transfer of the latter on leaving the mould, characterised in that one circulates air for maintaining the blanks (5) by the gripping means against the walls of the blanks, in order to ensure cooling of the blanks as they are conveyed on the gripping means.

2. Apparatus for carrying out the method according to Claim 1 comprising external and internal gripping means (13-25), of the type comprising a pneumatic suction arrangement, ensuring the extraction of the blanks (5) from their moulding cores and simultaneously the transfer of the latter on leaving the mould, characterised in that with their gripping means (13-25), the blanks (5) define annular chambers (15-27) in which air for cooling the walls of the blanks is circulated.

3. Apparatus according to Claim 2, characterised in that the annular chambers (15-27) are connected to a suction manifold (12-24) and communicate with the atmosphere by way of air suction orifices (21-36).

4. Apparatus according to one of Claims 2 and 3, characterised in that the inner diameter of the tubular body (14) of the outer gripping member (13) is greater than the outer diameter of the cylindrical body (6) of a blank (5) thus forming the annular chamber (15) for cooling the outer wall of the blank.

5. Apparatus according to Claim 4, characterised in that the suction manifold (12) is connected to the annular chamber (15) by suction orifices (18) in the base (16), distributed circumferentially and in the vicinity of the inner wall (17) of the tubular body (14) of the external gripping member (13)

6. Apparatus according to one of Claims 4 and 5, characterised in that the air suction orifices (21) of the tubular body (14) of the external gripping member (13) are distributed circumferentially around the cylindrical body (6) of the blank (5) in the vicinity of a frustoconical socket (19) for the entrance of the blank (5) into the external gripping member (13).

7. Apparatus according to one of Claims 2 and 3, characterised in that the outer diameter of the cylindrical body (26) of the internal gripping member (25) is less than the inner diameter of the blank (5), thus forming the annular chamber (27) for cooling the inner wall of the blank.

8. Apparatus according to Claim 7, characterised in that the cylindrical body (26) of the internal gripping member (25) is longer than the total length of the blank, thus providing a clearance (J) between the movable frame (23) supporting the internal gripping member (25) and the edge of the neck (8) of the blank (5).

9. Apparatus according to one of Claims 7 and 8, characterised in that the end (31) of the cylindrical body (26) of the internal gripping member (25) comprises curved fingers (32) defining orifices (34) for the passage of air and serving as a support for the spherical portion (7) forming the base of the blank (5).

10. Apparatus according to one of Claims 7 and 9, characterised in that the air suction orifices (36) are defined by guide ribs (30) distributed circumferentially over the cylindrical body (26), in the vicinity of the movable frame (23).

11. Apparatus according to one of Claims 1 to 10, characterised in that the conditions of the circulation of cooling air in the external and internal gripping members (13, 25) respectively are of the transitory or turbulent type.

**Fig.1**

**Fig. 2**

Fig. 3

Fig. 4

Fig. 5

Fig. 6

Fig. 7

Fig. 8